# EUROPEAN PATENT APPLICATION

(11) **EP 2 523 419 A1**
(43) Date of publication of application: **14.11.2012**
(21) Application number: 12167577.1
(22) Date of filing: 10.05.2012
(51) Int. Cl.: H04L 29/06

(54) **Network security device**

(30) Priority: 13.05.2011 GB 201108005
(71) Applicant: Cooper Technologies Company, Houston TX 77002-1001 (US)
(72) Inventor: Malins, Jonathan, Nr Royston, Hertfordshire SG8 5JL (GB)
(74) Representative: Gill, David Alan

(57) **Abstract**

The present invention provides for a security device for location within a network device and having first and second Medium Independent Interfaces for functional connection within the network device, whereby the MII interfaces can callow for location of the security device between a PHY chip and a MAC chip of the host network device.

## Description

The present invention relates to the provision of network security and, in particular, a security device for providing security for communication and data exchanges over, for example, a large global network such as the internet.

While the internet has enhanced and expanded the manner in which different users and entities can communicate with one another, it also forms a medium allowing improvements for remote access to network terminal devices, which could be found in any required scenario, for example within an industrialised plant, field site or otherwise.

Previously, bespoke networks had been provided for the required monitoring/control of the terminal devices, and for example, the exchange of process plant data there between. Such dedicated network systems while exhibiting an inherent level of security, nevertheless prove disadvantageous and limiting in view of the expense and potential complexity in establishing and maintaining the network and the interfacing of the various terminal devices thereto.

The adoption of a public network, such as the internet, has a means for achieving improved remote access to, for example, process plant data readily overcomes such known limitations. However, with the wide availability of internet access, the issue of security becomes more relevant whether on the basis of potential attacks either by malicious intruders, or playful amateurs.

Additionally, any current computer viruses or spyware can be the cause of problems insofar as they can result in the "crashing" of control systems and terminal devices.

It is also noted that many control systems currently in use have been in service for more than ten years and are generally designed to offer ongoing, and particularly speedy, functionality and are not overly concerned with security/defence issues.

It has been found that such legacy control systems can be made to perform in many unexpected ways upon receipt of messages that do not comply with the strict network layer protocol rules relevant to the system.

In addition to such Network Layer protocol attacks, or simple Denial of Service attacks, security issues can also arise from deliberate malicious attacks at the Application Layer where a "spoof' attacker seeks to exploit weaknesses in the older communications protocols to deliberately confuse or simply randomly change data in the target device.

The benefits of employing the internet for example in relation to process/plant data exchanges for control systems etc, dictates that enhancement of network security issues can prove attractive.

General security solutions have provided for "industrial firewalls" which are arranged to intercept and filter the incoming traffic to a target network device but such prior art solutions are not designed for control systems.

Also, safety systems have been constructed from products networked by commercial off-the-shelf communication protocols and wherein the level of security is often justified by control statements requiring that the device will not be written to during "safe operation". Such arrangement is however difficult to implement in general and particularly in the scenarios outlined above.

Attempts have also been made to develop specifications in products to determine levels of vulnerability and, as appropriate, offer appropriate defensive measures.

For example, the North American Electric Reliability Corporation (NARC) as defined a set of guidelines and measures which are mandatory for power generation utilities in the USA. Within the field of control system security, the ISA SP99 committee is seeking to define a set of standards by which "cyber security products" can be designed and assessed.

Yet further, while some products have been developed that are arranged to test the security of control and safety devices by rapidly sending every possible network attack to the targeting device to identify vulnerabilities, such devices are however limited in application as the number of Application Protocols is extremely high and thought to be un-testable by way of a single product.

Within the industrial and control-system environment, there is a distributed approach for zonal protection known as "Tofino" and which is arranged to be placed upstream of network terminal devices such as Power Line Communication (PLC) devices, Controllers Remote Terminal Units (RTU) and Supervisory Control and Data Acquisition (SCADA) devices.

Such known Tofino security appliances offer attractive features since, in the absence oaf their own IP address, they can borrow an address of an adjacent terminal device such that they then appear invisible within the network. Also all TCP/IP packets are received and transmitted if they conform to the TCP/IP protocol rules and are valid within the sequence of the current transaction state machine. For selected popular, or application communication, protocols, such as Modbus TCP, the content of each data packet is inspected in detail and validated against defined protocol rules. Also, such known firewalls can enhance the ease of configuration insofar as, rather than requiring extensive knowledge at set up, the firewall device can be designed to be self-teaming and easily configured by way of a simple graphical interface.

Such known firewall and security devices are, as noted, generally located upstream of then terminal device to be protected and are commonly employed within legacy systems where they can simply be inserted at the relevant upstream location.

However, the "upstream" provision of such known devices nevertheless exhibits disadvantages and limitations.

Inherent within its "upstream" location, is the fact that the device may well serve to protect a variety of terminal end devices and so represents a potential point of failure for each of the plurality of devices.

The power and size requirements and data management requirements are also significant if the device is to be located upstream of a variety of devices since it must exhibit the potential to handle data etc. for each of the variety of devices. Also, it can prove relatively easy to bypass, or otherwise circumvent the device once its upstream location has been identified.

The present invention seeks to provide for network-related security and in a manner having advantages over known security scenarios.

According to first aspect of the present invention there is provided a security device for location within a network device for secure communications to that device and having first and second Medium Independent Interfaces for functional connection within the network device.

As will be appreciated, the invention can prove advantageous insofar as, through the provision of the device within the actual network device to be protected, advantages can be readily achieved as regards the power requirements and physical size of device and also the reduced amount of data-handling required since the security device needs only an update specific to its actual host network device.

Further, the network device then becomes a point of failure for its host network device only and, as compared with the "upstream" industrial firewalls known in the art, the security is not so readily bypassed, or circumvented by means of the present invention.

Cost-effective and improved network security can therefore be realised by way of the invention.

Preferably, the security device can be arranged for incorporation into an Ethernet ten-ninal device.

As a particular advantage, the functionality of the security device can be revised and updated as required from a remote location. The security device can be arranged to borrow a network ID such as an IP address from its host, or indeed other, network device. In this manner each security device of the present invention that might be employed within a control system network remains "invisible" within the network. However, a Configuration Management Platform provided with appropriate coding can readily access the security device for delivering and initiating updates etc. Insofar as the security device can be provided specific to a host device, only updates etc. relevant to the operation of that device need be delivered to the security device.

Targeted updates etc. therefore can be delivered to each security device to maximize the level of security offered for each particular device while retaining the invisibility of the security device within the network to reduce the likelihood of a targeted attack.

Generally, the security device can be located between the PHY device and MAC device of the host network device.

According to another aspect of the present invention there is provided a security device arranged to be interfaced between a MAC device and PHY device of a host network device.

Preferably, the security device is arranged to include first and second Media Independent Interfaces (MII).

Any such device is then arranged to interface to the MII bus within the host device.

According to another aspect of the present invention there is provided a security device including first and second interfaces for interfacing within an Ethernet terminal device.

Preferably, the device is arranged to interface between a PHY device and MAC devices within the terminal device.

Of course, the device can comprise first and second Media Independent Interfaces.

As a further advantageous feature of the present invention, the security device can comprise an Application Specific Integrated Circuit (ASIC) associated with the internal or external memory functionality. In particular, the security device can include an external memory interface and can so be provided in the form of a micro-cored FPGA or, preferably, an ASIC.

Of course, the present invention also provides for a network device including a security device such as that defined above and, in particular, can comprise an Ethernet network product.

In particular, the said network device can comprise a network terminal device offering control functionality, such as terminal devices forming part of remote process/plant control systems.

Also, the invention can advantageously allow for enhanced security, integrated within a device and wherein the device designer does not need to have any particular security expertise since remote management, upgrading etc., also advantageously specific to that device, can be provided from a Configuration Management Platform in an efficient and secure manner.

The invention is described further herein after by way of example only, with reference to the accompanying drawings in which:
Fig 1 is a schematic representation of a control system configuration employing the internet according to the current art;
Fig 2 is a schematic diagram of a network terminal device including an embodiment of the present invention.

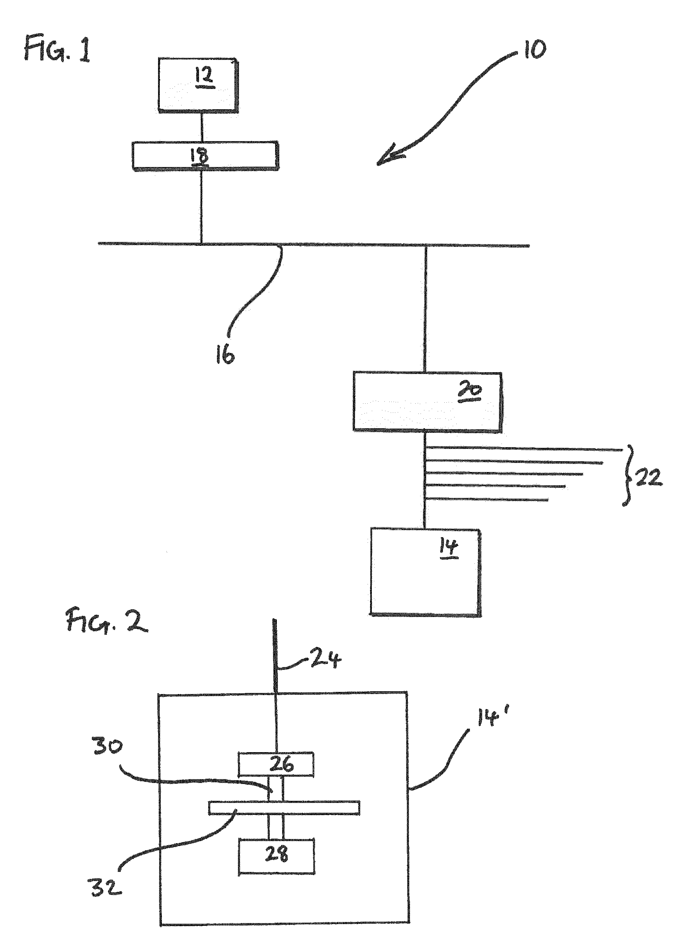

Turning first to Fig 1, there is provided a schematic illustration of a network control system 10 comprising a control terminal 12 remote from a plant terminal 14 which can for example provide safety monitoring or operational functionality as required by means of communication with the control terminal 12 by way of plant network16.
Known security measures are adopted in an attempt to isolate the control terminal 12, and plant terminal 14, and the exchange of plant data therebetween, from inherent security weaknesses of the network.

In this manner, and upstream of each of the terminal devices 12, 14, there is provided respectively an industrial firewall 18, 20.

The firewall 18 serves in particular to protect the control terminal 12 from malicious or other "hacking" attempts, and from Network Layer Protocol and Application Layer attacks.

Likewise, the firewall device 20 serves to offer a similar degree of protection for the plant terminal 14.

As is quite common however, the firewall device 20 also serves to provide protection for other network devices 22 (not individually illustrated within Fig 1).

Security arrangements such as the known firewall devices 18, 20 exhibit disadvantages and potential limitations insofar as, once located, they can be readily bypassed or otherwise circumvented. Also, when offering protection to a plurality of terminal devices, the firewall device can experience high demands on power, data handling and overall size of device.

Also, should, for example, the firewall device 20 fail, then this will act as a single point of failure for all of the devices 14, 22 that it is serving to protect.

Turning now to Fig 2, there is provided a schematic block diagram of a network terminal device 14' similar in functionality to the plant terminal device 14 of Fig 1, which has been arranged to incorporate the concept of the present invention so as to provide for advantages over the known firewall arrangements such as that illustrated in Fig 1.

Fig 2, represents a block diagram partially indicating some of the functionality of the plant terminal device 14' insofar as it relates to the security protection provided therein.

As illustrated, the plant terminal device 14' connects to a physical layer connection such as copper wire or optical fibre 24 by means of its PHY chip 26. As usual, the PHY chip 26 connects to a Media Access Control (MAC) chip 28 which can either comprise a stand-alone device or can be integrated into the micro controller of the plant terminal device 14'.

In the invention therefore it should be appreciated that reference to the PHY chip can encompass any appropriate physical interface whether wire, optical fibre, wireless or otherwise.

According to the illustrated embodiment of the present invention, the security functionality 32 is provided between the PHY chip 26 and the MAC chip 28.

Commonly, the connection between the PHY chip 26 and the MAC chip 28 comprises a seven-wire bus known as the Media Independent Interface (MII) bus and all communications that are exchanged between the PHY chip 26 and the MAC chip 28 travel via the bus 30.

Advantageously therefore, the security functionality can be provided by way of a security device comprising an appropriate Application Specific Integrated Circuit (ASIC), or indeed an Field Programmable Gate Array (FPGA), 32 which employs first and second MII interfaces for ready location within the data path between the PHY chip 26 and MAC chip 28. Such an ASIC or FPGA device will contain an embedded CPU arranged to perform the necessary processing, and any encryption, functions required and is also associated with memory functionality whether internal or external.

The security device 32, which herein can also be referred to as a firewall device, can in one example therefore also include an external memory interface (not shown) for ready connectivity to an external memory which can contain, for example, further loadable security modules and also the user's general security configuration.

The device is therefore readily arranged for remote updates etc from a Configuration Management Platform.

The security functionality offered by way of the device 32 can advantageously mirror that offered by way of known industrial firewalls such as those illustrated in relation to Fig 1.

Of course, the present invention also provides for a network device including a security device such as that defined above and, in particular, can comprise an Ethernet network product. In particular, the security device 32 need only contain a simplified version of Tofino code insofar as it will only likely be associated with a single host device 14'. Further, by virtue of even the basic current features of the known Tofino system, a user can either employ a fixed function installation, or retain full programmable flexibility using a Central Management Platform (CMP).

As noted above, the CMP is readily employed to access, monitor, administer, upgrade etc. each of the possible variety of security devices embedded within a respective variety of host network terminal devices, while those security devices remain otherwise "invisible" within the network. The CMP also allows for secure but accurate communication of service commands for all related securing aspects such as for example "advise" and "review" to the "invisible" device.

Thus, the preferred features from the known Tofino system as discussed above relating to "invisibility", operation as a stateful firewall, deep packet inspection and ease of "self learning" configuration, can all readily be retained, fully supported and employed as appropriate while avoiding the disadvantages and limitations of the current art.

The invention can therefore readily provide the security characteristics of a device, and which could be quite specific to that device, to be update to the challenges set by the possibly constantly evolving security threats.

## Claims

1. A security device arranged for location within a network device and having first and second Medium Independent Interfaces for functional connection within the network device.

2. A security device as claimed in Claim 1 and arranged for incorporation into an Ethernet terminal device.

3. A security device as claimed in Claim 1 or 2 and located between a PHY device and MAC device of a host network device.

4. A security device arranged for location within a network device and to be interfaced between a MAC device and PHY device of a host network device.

5. A security device as claimed in any one or more of Claims 1 to 4 and arranged to include first and second Media Independent Interfaces for connection to a MII bus.

6. A security device including first and second interfaces arranged for interfacing within an Ethernet terminal device.

7. A security device as claimed in Claim 6 and arranged to interface between a PHY device and MAC devices within the terminal device.

8. A security device as claimed in Claim 6 or 7 and including first and second Media Independent Interfaces.

9. A security device as claimed in any one or more of Claims 1 to 8 and comprising an ASIC or FPGA with integrated CPU.

10. A security device as claimed in any one or more of Claims 1 to 9 and arranged to employ a network node identifier from a host, or other, network device.

11. A security device as claimed in any one or more of Claims 1 to 10, and arranged with coding to allow access by a remote Configuration Management Platform.

12. A network device including a security device as claimed in any one or more of Claims 1 to 11.

13. A network arrangement including at least one network device as claimed in Claim 12.

14. A security device substantially as hereinbefore described with reference to Fig 2 of the accompanying drawings.
